# EUROPEAN PATENT APPLICATION

(11) **EP 4 842 108 A1**
(43) Date of publication of application: **18.11.2026**
(21) Application number: 25747403.1
(22) Date of filing: 02.01.2025
(51) Int. Cl.: H04W 72/12

(54) **COMMUNICATION METHOD AND RELATED APPARATUS**

(30) Priority: 30.01.2024 CN 202410137709
(71) Applicant: Huawei Technologies Co., Ltd., Shenzhen, Guangdong 518129 (CN)
(72) Inventor: JIAO, Minghan, Shenzhen, Guangdong 518129 (CN); LI, Ruijie, Shenzhen, Guangdong 518129 (CN)
(74) Representative: Huawei European IPR
(86) International application number: PCT/CN2025/070056
(87) International publication number: WO 2025/161826

(57) **Abstract**

A communication method and a related apparatus are provided. In the method, an uplink reference signal (namely, a first reference signal) is designed, so that when there is a data transmission requirement in an energy-saving mode, a terminal sends the first reference signal for fast synchronization and/or channel measurement, and the first reference signal is further used to trigger data transmission scheduling. In this way, fast data transmission in the energy-saving mode can be implemented through fewer transmission steps, thereby helping improve communication performance.

## Description

This application claims priority to Chinese Patent Application No. 202410137709.X, filed with the China National Intellectual Property Administration on January 30, 2024 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

Currently, global energy and environmental issues are severe, and increased energy consumption and rising prices keep operating costs of telecommunication networks high. In a telecommunication network, a proportion of energy consumption of a base station in total energy consumption of the telecommunication network continues to increase. The energy consumption of the base station includes many parts, for example, a load-related dynamic part and a load-independent static part. In a no-load or low-load scenario, the base station needs to frequently send some common signals, for example, a synchronization signal block (synchronization signal block, SSB), a system information block 1 (system information block 1, SIB1), a channel state information-reference signal (channel state information-reference signal, CSI-RS), and a tracking reference signal (tracking reference signal, TRS), for network discovery and accurate synchronization. Using the SSB as an example, before a terminal establishes a connection to the base station, the base station does not know a location of the terminal in a cell. Therefore, the base station needs to periodically send the SSB, so that the terminal detects the SSB and completes preliminary synchronization. In addition to the SSB, the base station may further send the TRS, so that the terminal detects the TRS and completes fine synchronization. In other words, synchronization accuracy of the TRS is higher than that of the SSB. The TRS supports periodic, semi-persistent, or aperiodic sending configuration. However, to ensure synchronization performance of the terminal, the base station generally configures periodic TRS sending for the terminal. From the perspective of the base station, the base station needs to frequently perform sending operations, and therefore cannot enter deep sleep or implement long-duration sleep, which is highly unfavorable to energy saving.

To save energy of a base station, researchers have proposed a base station energy-saving mode. In the energy-saving mode, the base station sends common signals at a relatively long periodicity, so that a terminal discovers a network and completes basic synchronization. In this way, an idle proportion of the base station in time domain is relatively high, thereby helping reduce power consumption. However, in the energy-saving mode, when the terminal has a data transmission requirement, communication performance is poor because the base station cannot obtain accurate channel information and the terminal maintains only basic synchronization with the base station.

### SUMMARY

This application provides a communication method and a related apparatus, thereby helping reduce network energy consumption. The following describes this application from different aspects. It should be understood that implementations and beneficial effects of the following different aspects may be mutually referenced.

According to a first aspect, this application provides a communication method. The method is performed by a communication apparatus. The communication apparatus may be a terminal, or may be a module in the terminal. In the method, the terminal may send a first reference signal, where the first reference signal is used to trigger scheduling information of data transmission, and the first reference signal is used for channel measurement and/or synchronization. Then, the terminal may receive the scheduling information.

In this embodiment, the first reference signal is used for fast synchronization and/or channel measurement, and is further used to trigger data transmission scheduling. Therefore, when the terminal has a data transmission requirement, the terminal can perform fast synchronization and/or channel measurement by using the first reference signal, and then obtain the scheduling information of data transmission. Compared with a manner in which the terminal receives a synchronization signal through blind detection and a manner in which the base station periodically and infrequently sends information used for synchronization and/or channel measurement, in embodiments of this application, fast data transmission in the energy-saving mode can be implemented through fewer transmission steps, thereby helping improve communication performance.

In a possible implementation, the receiving the scheduling information includes:
receiving the scheduling information within a first time period after sending the first reference signal; or
receiving the scheduling information in an A^{th} time unit after sending the first reference signal, where A is an integer greater than 0.

In this implementation, a timing relationship between the first reference signal and the scheduling information is specified. The terminal needs to detect the scheduling information only within the first time period or in the A^{th} time unit after sending the first reference signal, and does not need to blindly detect the scheduling information in each time unit or a plurality of time units after sending the first reference signal. Therefore, detection overheads and power consumption of the terminal are reduced.

In a possible implementation, the data transmission is downlink data transmission; before the sending a first reference signal, the method further includes: receiving a first trigger signal, where the first trigger signal is used to trigger the first reference signal.

In this implementation, a trigger procedure for downlink data transmission is designed. In this way, during downlink data transmission, the base station can trigger the terminal to quickly complete synchronization, channel measurement, and other steps before the downlink data transmission, thereby helping improve communication efficiency and reduce transmission overheads.

In a possible implementation, the sending a first reference signal includes: sending the first reference signal within a second time period after receiving the first trigger signal; or sending the first reference signal in a B-th time unit after receiving the first trigger signal, where B is an integer greater than 0.

In a possible implementation, the first trigger signal is used for synchronization, and the first reference signal is used for channel measurement.

In this implementation, the first trigger signal is designed to be used for synchronization, and the first reference signal is designed to be used for channel measurement, thereby improving implementation diversity of the solution.

In a possible implementation, after the sending a first reference signal, the method further includes: receiving a second reference signal, where the second reference signal is used for interference measurement; and sending interference measurement information based on the second reference signal.

In this implementation, after the base station completes channel measurement, the terminal further measures downlink interference, so that scheduling is more accurate, thereby helping improve downlink transmission performance.

In a possible implementation, the receiving a second reference signal includes:
receiving the second reference signal within a third time period after sending the first reference signal; or receiving the second reference signal in a C-th time unit after sending the first reference signal, where C is an integer greater than 0.

In a possible implementation, the receiving the scheduling information includes: receiving the scheduling information within a fourth time period after sending the interference measurement information; or a start time unit of the scheduling information is a D-th time unit after an end time unit of the interference measurement information, where D is an integer greater than 0.

In a possible implementation, the scheduling information further includes synchronization information corresponding to the first reference signal.

In this implementation, when the first reference signal is used for synchronization, a peer end (namely, the base station) may determine synchronization information (for example, a timing offset and/or a frequency offset) based on the first reference signal, and carry the determined synchronization information in the scheduling information sent to the terminal. In this way, the scheduling information carries both the synchronization information and the scheduling information of data transmission, thereby reducing signaling overheads and power consumption of the terminal and the base station.

In a possible implementation, the first reference signal is used for synchronization, and the first reference signal includes a plurality of reference signals; frequency domain positions of transmission resources of the plurality of reference signals are the same, and time domain positions of the transmission resources of the plurality of reference signals are spaced apart.

In this implementation, the first reference signal can have a synchronization function. In other words, calculation of a timing offset and a frequency offset needs to be implemented based on a plurality of reference signals that have the same frequency domain position and different time domain positions.

In a possible implementation, each of the plurality of reference signals included in the first reference signal corresponds to a plurality of antenna ports.

In this implementation, the first reference signal can have a channel measurement function.

According to a second aspect, this application provides a communication method. The method is performed by a communication apparatus. The communication apparatus may be a radio access network device, or may be a module in the radio access network device. In the method, the radio access network device receives a first reference signal, where the first reference signal is used to trigger scheduling information of data transmission, and the first reference signal is used for channel measurement and/or synchronization. Then, the radio access network device sends the scheduling information. For example, the radio access network device may be a base station.

In a possible implementation, the sending the scheduling information includes: sending the scheduling information within a first time period after receiving the first reference signal; or sending the scheduling information in an A^{th} time unit after receiving the first reference signal, where A is an integer greater than 0.

In a possible implementation, the data transmission is downlink data transmission; before the receiving a first reference signal, the method further includes: sending a first trigger signal, where the first trigger signal is used to trigger the first reference signal.

In a possible implementation, the receiving a first reference signal includes: receiving the first reference signal within a second time period after sending the first trigger signal; or receiving the first reference signal in a B-th time unit after sending the first trigger signal, where B is an integer greater than 0.

In a possible implementation, the first trigger signal is used for synchronization, and the first reference signal is used for channel measurement.

In a possible implementation, after the receiving a first reference signal, the method further includes: sending a second reference signal, where the second reference signal is used for interference measurement; and receiving interference measurement information.

In a possible implementation, the sending a second reference signal includes: sending the second reference signal within a third time period after receiving the first reference signal; or sending the second reference signal in a C-th time unit after receiving the first reference signal, where C is an integer greater than 0.

In a possible implementation, the sending the scheduling information includes: sending the scheduling information within a fourth time period after receiving the interference measurement information; or a start time unit of the scheduling information is a D-th time unit after an end time unit of the interference measurement information, where D is an integer greater than 0.

In a possible implementation, the scheduling information further includes synchronization information corresponding to the first reference signal.

In a possible implementation, the first reference signal is used for synchronization, and the first reference signal includes a plurality of reference signals; periods and frequency domain positions of transmission resources respectively corresponding to the plurality of reference signals are the same, and time domain positions of the transmission resources of the plurality of reference signals are spaced apart.

According to a third aspect, this application provides a communication method. The method is performed by a communication apparatus. The communication apparatus may be a terminal, or may be a module in the terminal. In the method, the terminal receives a third reference signal, where the third reference signal is used to trigger scheduling information of data transmission, and the third reference signal is used for channel measurement and/or synchronization. Then, the terminal receives the scheduling information.

In this embodiment, the third reference signal is used for fast synchronization and/or channel measurement, and is further used to trigger data transmission scheduling. Therefore, when the terminal has a data transmission requirement, the terminal can perform fast synchronization and/or channel measurement by using the third reference signal, and then obtain the scheduling information of data transmission. Compared with a manner in which the terminal receives a synchronization signal through blind detection and a manner in which the base station periodically and infrequently sends information used for synchronization and/or channel measurement, in embodiments of this application, fast data transmission in the energy-saving mode can be implemented through fewer transmission steps, thereby helping improve communication performance.

In a possible implementation, the receiving the scheduling information includes: receiving the scheduling information within a fifth time period after receiving the third reference signal; or receiving the scheduling information in an E-th time unit after receiving the third reference signal, where E is an integer greater than 0.

In a possible implementation, the data transmission is uplink data transmission; before the receiving a third reference signal, the method further includes: sending a second trigger signal, where the second trigger signal is used to trigger the third reference signal.

In this implementation, a trigger procedure for uplink data transmission is designed. Therefore, when the terminal has an uplink data transmission requirement, the terminal can trigger fast completion of synchronization, channel measurement, and other steps before the uplink data transmission, thereby helping improve communication efficiency and reduce transmission overheads.

In a possible implementation, the second trigger signal is used for synchronization, and the third reference signal is used for channel measurement.

In this implementation, the second trigger signal is designed to be used for synchronization, and the third reference signal is designed to be used for channel measurement, thereby improving implementation diversity of the solution.

In a possible implementation, the third reference signal further includes synchronization information corresponding to the second trigger signal, or the scheduling information further includes synchronization information corresponding to the second trigger signal.

In this implementation, during scheduling of uplink data transmission, when the first reference signal is used for synchronization, carrying, in the third reference signal/scheduling information, the synchronization information corresponding to the second trigger signal helps reduce transmission overheads.

In a possible implementation, the third reference signal and the scheduling information belong to a same transmission structure.

In this implementation, by designing the third reference signal and the scheduling information to belong to the same transmission structure (or, in other words, by delivering the third reference signal and the scheduling information at one time by using one transmission structure), transmission steps can be reduced, thereby helping improve transmission efficiency and reduce transmission delay.

In a possible implementation, the third reference signal is used for channel measurement; and the method further includes: sending channel information corresponding to the third reference signal.

In this implementation, when the third reference signal is used for channel measurement, the terminal sends channel information after receiving the first reference signal, so that scheduling is more accurate, thereby helping improve transmission performance.

In a possible implementation, the receiving the scheduling information includes: receiving the scheduling information within a sixth time period after sending the channel information; or a start time unit of the scheduling information is an F-th time unit after an end time unit of the channel information, where F is an integer greater than 0.

In a possible implementation, the third reference signal is used for synchronization, and the third reference signal includes a plurality of reference signals; frequency domain positions of transmission resources of the plurality of reference signals are the same, and time domain positions of the transmission resources of the plurality of reference signals are spaced apart.

In this implementation, by designing frequency domain positions of transmission resources of the plurality of reference signals included in the third reference signal to be the same and time domain positions of the transmission resources of the plurality of reference signals to be spaced apart, the third reference signal can have a synchronization function. Optionally, by designing antenna ports of transmission resources respectively corresponding to the plurality of reference signals included in the third reference signal to be the same, the third reference signal can have a channel measurement function.

According to a fourth aspect, this application provides a communication method. The method is performed by a communication apparatus. The communication apparatus may be a radio access network device, or may be a module in the radio access network device. In the method, the radio access network device sends a third reference signal, where the third reference signal is used to trigger scheduling information of data transmission, and the third reference signal is used for channel measurement and/or synchronization. Then, the radio access network device sends the scheduling information. For example, the radio access network device may be a base station.

In a possible implementation, the sending the scheduling information includes: sending the scheduling information within a fifth time period after sending the third reference signal; or sending the scheduling information in an E-th time unit after sending the third reference signal, where E is an integer greater than 0.

In a possible implementation, the data transmission is uplink data transmission; before the sending a third reference signal, the method further includes: receiving a second trigger signal, where the second trigger signal is used to trigger the third reference signal.

In a possible implementation, the second trigger signal is used for synchronization, and the third reference signal is used for channel measurement.

In a possible implementation, the third reference signal further includes synchronization information corresponding to the second trigger signal, or the scheduling information further includes synchronization information corresponding to the second trigger signal.

In a possible implementation, the third reference signal and the scheduling information belong to a same transmission structure.

In a possible implementation, the third reference signal is used for channel measurement; and the method further includes: receiving channel information corresponding to the third reference signal.

In a possible implementation, the sending the scheduling information includes: sending the scheduling information within a sixth time period after receiving the channel information; or a start time unit of the scheduling information is an F-th time unit after an end time unit of the channel information, where F is an integer greater than 0.

In a possible implementation, the third reference signal is used for synchronization, and the third reference signal includes a plurality of reference signals; frequency domain positions of transmission resources of the plurality of reference signals are the same, and time domain positions of the transmission resources of the plurality of reference signals are spaced apart.

According to a fifth aspect, this application provides a communication apparatus. The communication apparatus includes a unit or module configured to perform any method according to any one of the first aspect to the fourth aspect, or any possible implementation of any one of the aspects.

According to a sixth aspect, this application provides a communication apparatus. The communication apparatus includes a processor, a transceiver, and a memory. The processor, the transceiver, and the memory are coupled, and a computer program is stored in the memory. The processor and the transceiver are configured to invoke the computer program in the memory, so that the communication apparatus performs any method according to any one of the first aspect to the fourth aspect, or any possible implementation of any one of the aspects.

In a possible design, the communication apparatus may be a chip that implements the foregoing method, or a device including the chip.

According to a seventh aspect, this application provides a communication apparatus. The communication apparatus includes a processor and an interface circuit. The interface circuit is configured to receive a signal from another communication apparatus outside the communication apparatus and transmit the signal to the processor, or send a signal from the processor to another communication apparatus outside the communication apparatus. The processor is configured to implement, by using a logic circuit or by executing code instructions, any method according to any one of the first aspect to the fourth aspect, or any possible implementation of any one of the aspects.

According to an eighth aspect, this application provides a computer-readable storage medium. The storage medium stores a computer program or instructions. When the computer program or the instructions are executed by a computer, any method according to any one of the first aspect to the fourth aspect, or any possible implementation of any one of the aspects is implemented.

According to a ninth aspect, this application provides a computer program product. When a computer reads and executes the computer program product, the computer is enabled to perform any method according to any one of the first aspect to the fourth aspect, or any possible implementation of any one of the aspects.

According to a tenth aspect, this application provides a communication system. The communication system may include a terminal and a radio access network device. The terminal is configured to perform the method according to the first aspect or any possible implementation of the first aspect, or perform the method according to the third aspect or any possible implementation of the third aspect. The radio access network device is configured to perform the method according to the second aspect or any possible implementation of the second aspect, or perform the method according to the fourth aspect or any possible implementation of the fourth aspect.

### BRIEF DESCRIPTION OF DRAWINGS

FIG. 1 is a schematic diagram of an architecture of a communication system to which an embodiment of this application is applied;
FIG. 2 is a schematic diagram of time units of different granularities according to this application;
FIG. 3 is a schematic diagram in which a base station obtains channel information;
FIG. 4 is a schematic diagram in which a terminal completes time/frequency synchronization;
FIG. 5 is a schematic flowchart of a communication method according to an embodiment of this application;
FIG. 6 is a schematic diagram of configuration of a first reference signal according to an embodiment of this application;
FIG. 7 is a schematic diagram in which a first reference signal triggers scheduling information of data transmission according to an embodiment of this application;
FIG. 8 is another schematic flowchart of a communication method according to an embodiment of this application;
FIG. 9 is a schematic diagram in which a third reference signal triggers scheduling information of data transmission according to an embodiment of this application;
FIG. 10 is a schematic structural diagram of a possible communication apparatus according to an embodiment of this application; and
FIG. 11 is a schematic structural diagram of a possible communication apparatus according to an embodiment of this application.

The following clearly and completely describes technical solutions in embodiments of this application with reference to the accompanying drawings in embodiments of this application.

In the descriptions of this application, terms such as "first" and "second" are merely used to distinguish between different objects, and are not used to describe a specific order. In addition, unless otherwise specified, "/" indicates "or". For example, A/B may indicate A or B. The term "and/or" in this specification describes only an association relationship between associated objects and indicates that three relationships may exist. For example, A and/or B may indicate the following three cases: Only A exists, both A and B exist, and only B exists. In addition, "at least one" means one or more, and "a plurality of" means two or more. "At least one of the following items" or a similar expression thereof means any combination of these items, including any combination of a single item or a plurality of items. For example, at least one of a, b, or c may indicate a, b, c, a and b, a and c, b and c, or a and b and c, where a, b, and c may be singular or plural.

The terms "include" and "have" and any variants thereof are intended to cover non-exclusive inclusion. For example, a process, method, system, product, or device that includes a series of steps or units is not limited to the listed steps or units, and optionally further includes an unlisted step or unit, or optionally further includes another inherent step or unit of the process, method, product, or device.

In this application, terms such as "exemplary" or "for example" are used to represent giving an example, an illustration, or a description. Any embodiment or design solution described as "exemplary", "for example", or the like in this application should not be construed as being more preferred or advantageous than another embodiment or design solution. More precisely, use of the terms such as "exemplary", "for example", or the like is intended to present a related concept in a specific manner.

It may be understood that, in this application, "when", "if", and "in case of" all mean that an apparatus performs corresponding processing in an objective circumstance, do not impose a time limitation, do not require that the apparatus necessarily perform a determining action during implementation, and do not imply any other limitation.

In this application, an element expressed in the singular form is intended to represent "one or more", instead of "one and only one", unless otherwise specified.

It may be understood that, in embodiments of this application, "B corresponding to A" indicates that A and B have a correspondence, and B may be determined based on A. Determining B based on A does not mean determining B based only on A, and B may alternatively be determined based on A and/or other information.

For a better understanding of embodiments of this application, a system architecture involved in embodiments of this application is first described below.

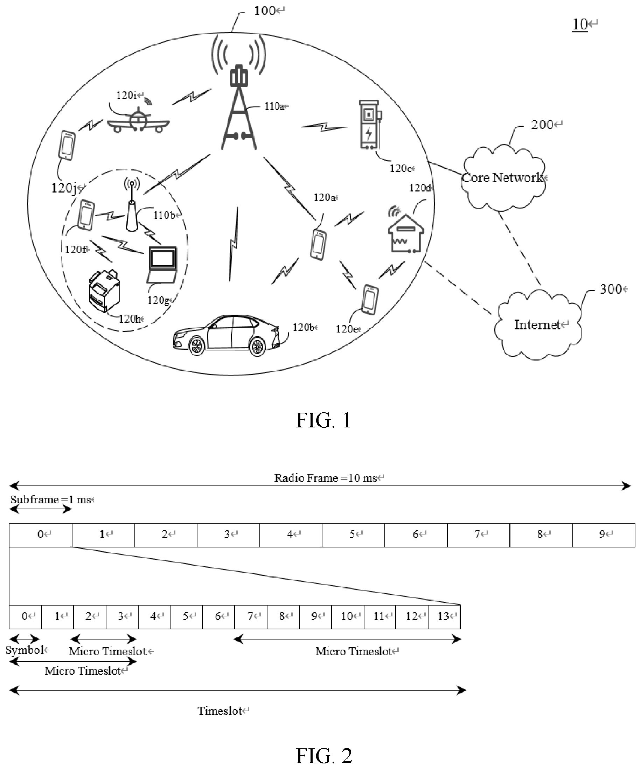

Refer to FIG. 1. FIG. 1 is a schematic diagram of an architecture of a communication system to which an embodiment of this application is applied. It should be noted that FIG. 1 is a possible and non-limiting schematic diagram of a system. As shown in FIG. 1, a communication system 10 includes a radio access network (radio access network, RAN) 100 and a core network (core network, CN) 200. Optionally, the communication system 10 may further include an internet 300. The RAN 100 includes at least one RAN node (for example, 110a and 110b in FIG. 1, collectively referred to as 110) and at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, may be a same physical device that integrates a logical function of the core network and a logical function of the radio access network, or may be one physical device that integrates a part of functions of the core network device and a part of functions of the RAN node 110. Terminals may be connected to each other in a wired or wireless manner, and RAN nodes 110 may be connected to each other in a wired or wireless manner. FIG. 1 is merely a schematic diagram. The communication system may further include another network device, for example, a wireless relay device or a wireless backhaul device, which is not shown in FIG. 1.

The RAN 100 may be a cellular access system related to the 3rd generation partnership project (3rd generation partnership project, 3GPP), for example, a 4G mobile communication system, a 5G mobile communication system, or a future-oriented evolution system (for example, a 6G mobile communication system). The RAN 100 may alternatively be an open radio access network (open RAN, O-RAN or ORAN), a cloud radio access network (cloud radio access network, CRAN), or a wireless fidelity (wireless fidelity, Wi-Fi) system. The RAN 100 may alternatively be a convergence of two or more of the foregoing systems.

The RAN node 110, sometimes also referred to as a radio access network device, an access network device, a RAN entity, an access node, or the like, forms a part of the communication system and is configured to assist the terminal in implementing radio access. A plurality of RAN nodes 110 in the communication system 10 may be nodes of a same type or nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For a terminal 120j that accesses the RAN 100 through the network element 120i, the network element 120i is a base station; however, for the base station 110a, the network element 120i is a terminal. The RAN node 110 and the terminal 120 may sometimes both be referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node 110 may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node 110 may be a macro base station (for example, 110a in FIG. 1), a micro base station or an indoor base station (for example, 110b in FIG. 1), a relay node, a donor node, or a wireless controller in a CRAN scenario. Optionally, the RAN node 110 may alternatively be a server, a wearable device, a vehicle, a vehicle-mounted device, or the like. For example, an access network device in vehicle-to-everything (vehicle to everything, V2X) technology may be a roadside unit (road side unit, RSU). All or some functions of the RAN node 110 in this application may alternatively be implemented by software functions running on hardware, or by virtualized functions instantiated on a platform (for example, a cloud platform). The RAN node 110 in this application may alternatively be a logical node, a logical module, or software capable of implementing all or some functions of the RAN node 110.

In another possible scenario, a plurality of RAN nodes 110 cooperate to assist a terminal in implementing radio access, and different RAN nodes 110 separately implement a part of functions of a base station. For example, the RAN node 110 may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or radio frequency unit, for example, a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art can understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the following uses the CU, the CU-CP, the CU-UP, the DU, and the RU as examples for description. Any one of the CU (or the CU-CP and the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine type communication (machine-type communication, MTC), an internet of things (internet of things, IoT), virtual reality, augmented reality, industrial control, autonomous driving, telemedicine, a smart grid, smart furniture, a smart office, smart wearable devices, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application. For ease of description, the following uses the terminal as an example for detailed description.

For ease of description, the following uses a base station as an example of the RAN node 110 for description. The base station and the terminal may be fixed or movable. The base station and the terminal may be deployed on land, including indoors or outdoors, handheld or vehicle-mounted; may be deployed on water; or may be deployed on an airplane, a balloon, or a man-made satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For a terminal 120j that accesses the radio access network 100 through 120i, the terminal 120i is a base station; however, for the base station 110a, 120i is a terminal, that is, communication between 110a and 120i is performed based on a radio air interface protocol. Certainly, 110a and 120i may alternatively communicate with each other by using an interface protocol between base stations. In this case, relative to 110a, 120i is also a base station. Therefore, the base station and the terminal may be collectively referred to as communication apparatuses. 110a and 110b in FIG. 1 may be referred to as communication apparatuses having a base station function, and 120a to 120j in FIG. 1 may be referred to as communication apparatuses having a terminal function.

Communication may be performed between the base station and the terminal, between base stations, or between terminals by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem having the base station function. The control subsystem having the base station function herein may be a control center in the foregoing application scenarios such as a smart grid, industrial control, smart transportation, and a smart city. A function of the terminal may alternatively be performed by a module (for example, a chip or a modem) in the terminal, or may be performed by an apparatus having the terminal function.

In this application, the base station sends a downlink signal or downlink information to the terminal, and the downlink information is carried on a downlink channel; and the terminal sends an uplink signal or uplink information to the base station, and the uplink information is carried on an uplink channel. To communicate with the base station, the terminal needs to establish a radio connection in a cell controlled by the base station. A cell that establishes a radio connection with the terminal is referred to as a serving cell of the terminal. When the terminal communicates with the serving cell, the terminal is further interfered with by a signal from a neighboring cell.

For ease of understanding related content of embodiments of this application, some knowledge used in the solutions of this application is described below. It should be noted that the following explanations are intended to facilitate understanding of embodiments of this application, and should not be construed as limiting the protection scope claimed by this application.

### 1. Time unit

A time unit is a time domain unit used for signal transmission, and is a granularity in time domain. One time unit includes a plurality of symbols. Alternatively, one time unit may be a radio frame (radio frame), a subframe (subframe), a slot (slot), a mini-slot (mini-slot), or a symbol. FIG. 2 shows an example of relationships between time units of different granularities. In FIG. 2, a time domain length of one radio frame is 10 milliseconds (ms). One radio frame may include 10 subframes, and a time domain length of one subframe is 1 ms. One subframe may include one or more slots. A quantity of slots included in one subframe is related to a subcarrier spacing (subcarrier spacing, SCS). When the SCS is 15 kHz, a time domain length of one slot is 1 ms. One slot includes 14 symbols.

### 2. Channel information

When a signal travels from a transmit end to a receive end through a radio channel, fading may occur because the signal may undergo scattering and reflection and because energy attenuates with distance. Channel information is used to represent characteristics of the radio channel and carries channel-related content. A communication apparatus usually obtains channel information through a reference signal and channel measurement. A reference signal is a known signal provided by a transmit end to a receive end for channel estimation or channel sounding. The reference signal may be used for channel measurement, interference measurement, and the like. For example, the terminal obtains channel information by measuring parameters such as reference signal received quality (reference signal received quality, RSRQ) and a signal-to-noise ratio (signal-to-noise ratio, SNR). A downlink reference signal may be, for example, a channel state information-reference signal (channel state information-reference signal, CSI-RS). The base station sends the CSI-RS to the terminal, the terminal measures a channel based on the CSI-RS to obtain channel state information (channel state information, CSI), and reports the CSI to the base station. In this way, the terminal and the base station align their understanding of a channel state. An uplink reference signal may be, for example, a sounding reference signal (sounding reference signal, SRS). The terminal sends the SRS to the base station, and the base station measures the channel based on the SRS to obtain the channel state.

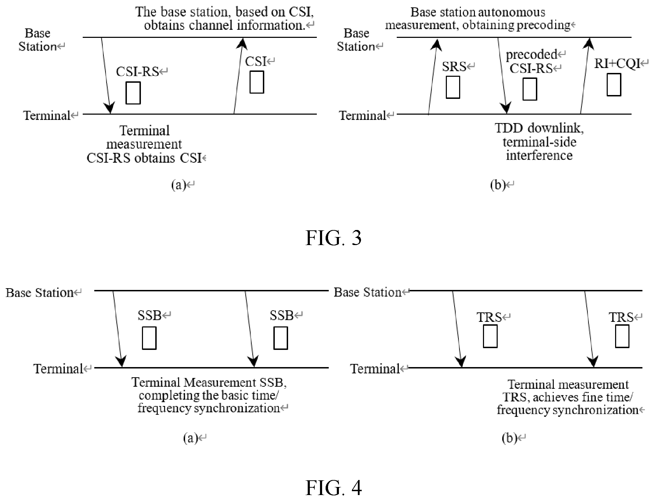

Specifically, in a current new radio (new radio, NR) system, a base station mainly obtains channel information in the following two manners, as shown in (a) and (b) in FIG. 3:
1) The base station sends a channel state information-reference signal (channel state information reference signal, CSI-RS), and the terminal receives the CSI-RS, measures channel information, finally generates channel state information (channel state information, CSI), and reports the CSI to the base station.
2) The terminal sends a sounding reference signal (sounding reference signal, SRS), and the base station receives the SRS and obtains precoding through measurement. In addition, for downlink data transmission in a time division duplex (time division duplex, TDD) system, after obtaining the precoding, the base station further sends a precoded CSI-RS (that is, a precoded CSI-RS). After receiving the precoded CSI-RS, the terminal further measures interference information, finally obtains a rank indicator (rank indicator, RI) and a channel quality indicator (channel quality indicator, CQI), and reports the RI and the CQI to the base station.

Channel information may be reported in three manners: periodic reporting, semi-persistent reporting, and aperiodic reporting. For periodic reporting and semi-persistent reporting of channel information, periodic transmission resources are configured for the channel information, and the base station and the terminal send or receive the channel information on the periodic transmission resources according to the configuration. Aperiodic channel information reporting is triggered by downlink control information sent by the base station. In addition, aperiodic channel information reporting is usually one-time reporting. After the terminal sends channel information once, transmission of the channel information is completed. To ensure timeliness of the channel information, the base station usually configures periodic channel information reporting for the terminal. In other words, the base station periodically sends the CSI-RS, so that the terminal reports CSI based on the CSI-RS.

It should be understood that, after obtaining the channel information of the terminal, the base station performs corresponding uplink/downlink data scheduling based on the channel information.

### 3. Time/frequency synchronization

In a current NR communication system, signals used for time/frequency synchronization mainly include two types: a synchronization signal and PBCH block (synchronization signal and PBCH block, SSB) and a TRS.

The SSB is a periodically sent common signal, and occupies 20 resource blocks (resource block, RB) in frequency domain. The SSB may include two parts: a synchronization signal (synchronization signal, SS) and a physical broadcast channel (physical broadcast channel, PBCH). The SS may include a primary synchronization signal (primary synchronization signal, PSS) and a secondary synchronization signal (secondary synchronization signal, SSS). Therefore, it may also be considered that the SSB includes three parts, namely, the PSS, the SSS, and the PBCH. As shown in (a) in FIG. 4, the terminal periodically detects the SSB and completes preliminary time-frequency synchronization (referred to as primary synchronization below) based on the received SSB. In addition to the SSB, the base station may further send a TRS, so that the terminal completes finer time/frequency synchronization. In frequency domain, a larger quantity of pilots are sent for the TRS, and timing offset measurement resolution of the TRS is higher. In time domain, the SSS and the PSS are generally separated by two symbols, whereas the TRS occupies two consecutive slots, and transmission resources of the TRS in each slot are separated by four symbols. Therefore, frequency offset measurement resolution of the TRS is higher. Consequently, synchronization accuracy of the TRS is higher than that of the SSB. The TRS may be understood as a special CSI-RS. As shown in (b) in FIG. 4, the terminal receives the TRS and may complete finer time-frequency synchronization (referred to as secondary synchronization below) based on the TRS. Similar to the foregoing reporting of channel information, the TRS also supports periodic sending, semi-persistent sending, or aperiodic sending. To ensure timeliness of time-frequency synchronization of the terminal, the base station generally configures periodic TRS sending for the terminal.

### 4. Transmission structure

A transmission structure may be understood as transmitting a plurality of pieces of information as a whole. In other words, for transmission of one transmission structure, from the perspective of a transmit end, all information in the transmission structure should be completely sent at one time; and from the perspective of a receive end, all information in the transmission structure should be completely received at one time. A transmission structure may be a frame structure, an independent transmission channel, or a fixed format.

### 5. Common signal

A common signal may also be referred to as common information or non-dedicated information, or may be understood as information sent by one communication device to a plurality of communication devices. Downlink communication is used as an example. Common information may be understood as information sent by a base station to a plurality of terminals or a terminal group in a cell, may be understood as information not specifically sent by a network device to a particular terminal or terminal group in the cell, or may be understood as information that can be jointly used by a plurality of terminals or a terminal group in the cell. For example, the common signal may be system information, a synchronization signal, a paging message, or the like. For example, the common signal may be used in procedures such as synchronization between the terminal and the base station, cell identification by the terminal, initial cell access by the terminal, neighboring-cell measurement, or cell handover.

### 6. Base station energy saving

A base station needs to periodically send some common signals, so that a terminal identifies the base station and accesses a network. For a cell having no service transmission requirement or a small service transmission requirement, the base station still needs to periodically send the common signals, resulting in relatively high overheads of the base station. A possible energy-saving manner is to lengthen a common-signal transmission period, thereby reducing a common-signal transmission frequency of the base station and implementing energy saving of the base station. However, in this manner, when the terminal has a data transmission requirement, the following problems occur. On one hand, because no CSI-RS/SRS is periodically sent, the base station cannot obtain accurate channel information of the terminal, and therefore cannot accurately schedule data transmission for the terminal. On the other hand, in the energy-saving mode, if only an SSB/DRS with a long period is sent, the terminal maintains only basic synchronization with the base station and does not have more accurate synchronization. Therefore, when the terminal receives a transmission having a relatively high modulation order (for example, a modulation order of 256 quadrature amplitude modulation (quadrature amplitude modulation, QAM)) or a relatively high coding rate (for example, a coding rate of 3/4 or higher), a performance loss is relatively significant. Based on this, relevant technical personnel have proposed that, when there is a data transmission requirement, the base station separately schedules a reference signal used for synchronization and a reference signal used for channel measurement. The base station can schedule and transmit data only after the terminal completes synchronization and reports channel state information. However, data transmission in this manner involves a complex and time-consuming overall procedure, and severely affects a user-perceived throughput (user-perceived throughput, UPT) indicator.

Based on the foregoing analysis, this application provides a communication method. By designing a reference signal that can simultaneously trigger data transmission scheduling and synchronization and/or channel measurement, fast data transmission in an energy-saving mode can be implemented, thereby helping improve communication performance.

The following describes in detail the communication method and the communication apparatus provided in this application.

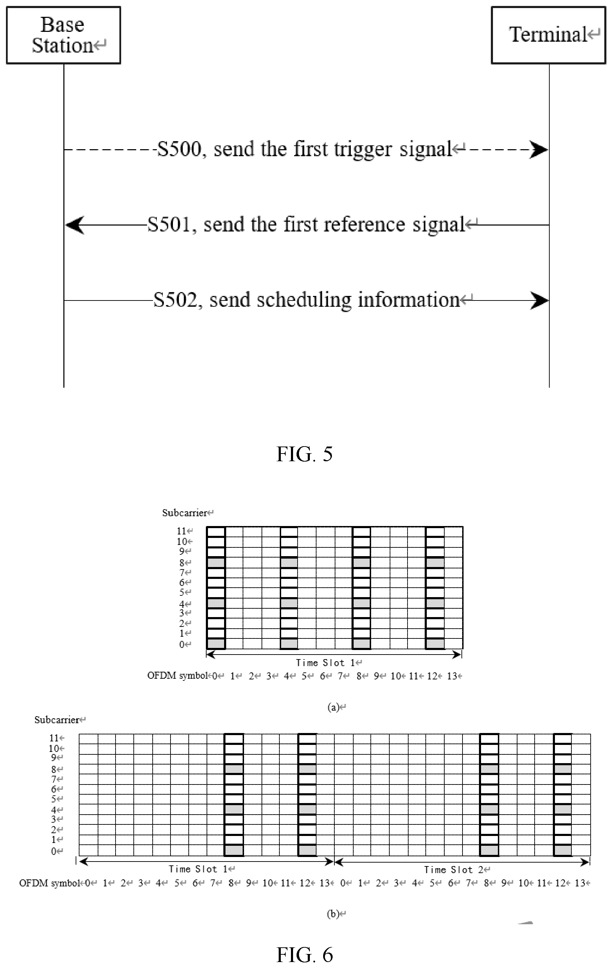

Refer to FIG. 5. FIG. 5 is a schematic flowchart of a communication method according to an embodiment of this application. An execution body of the method shown in FIG. 5 may be a base station or a terminal. Alternatively, the execution body of the method shown in FIG. 5 may be a chip in a base station or a terminal. For ease of description, the following mainly uses the base station or the terminal as the execution body for description. It should be understood that FIG. 5 is a schematic flowchart of a method embodiment of this application, and shows detailed communication steps or operations of the method. However, these steps or operations are merely examples. In embodiments of this application, another operation or a variation of an operation in FIG. 5 may further be performed. In addition, the steps in FIG. 5 may be performed in an order different from that presented in FIG. 5, and not all operations in FIG. 5 may need to be performed. As shown in FIG. 5, the communication method may include the following steps.

S501: The terminal sends a first reference signal to the base station. Correspondingly, the base station receives the first reference signal from the terminal.

Specifically, the first reference signal is used to trigger scheduling information of data transmission (or, the first reference signal is used to trigger the base station to send scheduling information of data transmission, or the first reference signal is used to trigger the terminal to receive scheduling information of data transmission), and the first reference signal is used for channel measurement and/or synchronization. It may be understood that, in this application, the description "trigger" may alternatively be replaced with "request", "enable", "indicate", or the like. Details are not repeatedly described below. It may be understood that data transmission involved in this application may be uplink data transmission or downlink data transmission. Uplink data transmission means that the terminal sends data to the base station, and downlink data transmission means that the base station sends data to the terminal.

It may be understood that, when the first reference signal is used for synchronization, the terminal and the base station may complete synchronization through uplink transmission. In a possible manner, the first reference signal may include a plurality of reference signals. Periods and frequency domain positions of transmission resources respectively corresponding to the plurality of reference signals are the same, and time domain positions of the transmission resources of the plurality of reference signals are spaced apart. The frequency domain position may include a bandwidth, a used subcarrier, and the like. Optionally, pilot sequences corresponding to the transmission resources of the plurality of reference signals may also be the same (or, pilot sequences of the reference signals may be the same). In this design, the terminal can implement time-frequency synchronization based on the first reference signal. Optionally, in this application, that frequency domain positions of transmission resources of the plurality of reference signals are the same may also be understood as follows: Antenna ports of transmission resources respectively corresponding to the plurality of reference signals are the same. In other words, same antenna ports mean that same frequency domain resources are used for transmission.

It should be noted that the foregoing time domain positions of the transmission resources of the plurality of reference signals being spaced apart may be understood as follows: The transmission resources of the plurality of reference signals are non-contiguous in time domain, or time domain positions of transmission resources of adjacent reference signals in the plurality of reference signals are spaced apart. Time domain positions of the plurality of reference signals may be equally spaced or unequally spaced. In a possible manner, the time domain positions of the transmission resources of the plurality of reference signals belong to a same slot. Alternatively, the time domain positions of the transmission resources of the plurality of reference signals are located in two or more consecutive slots.

For example, as shown in (a) in FIG. 6, a plurality of reference signals are distributed in a same slot (for example, slot 1), and time domain positions of transmission resources of every two adjacent reference signals are separated by three orthogonal frequency division multiplexing (OFDM) symbols. (a) in FIG. 6 shows transmission resources of four reference signals. OFDM symbol indexes of time domain positions of the transmission resources of the four reference signals are 0, 4, 8, and 12, respectively. Frequency domain positions of the transmission resources of the four reference signals are the same, and subcarrier indexes are all 0, 4, and 8. For another example, as shown in (b) in FIG. 6, a plurality of reference signals are distributed in two consecutive slots (for example, slot 1 and slot 2), and each slot includes two reference signals. Time domain positions of transmission resources of the reference signals in a same slot are separated by three OFDM symbols. (b) in FIG. 6 shows transmission resources of four reference signals. OFDM symbol indexes of time domain positions of the transmission resources of the reference signals in each slot are 8 and 12, respectively. Frequency domain positions of the transmission resources of the four reference signals are the same, and subcarrier indexes are all 0, 4, and 8.

For example, a pilot sequence of a reference signal involved in this application may satisfy the following formula:
, where is the pilot sequence, c represents a base sequence for generating the pilot sequence, and m represents a value corresponding to an m-th position in the pilot sequence.

It may be understood that, when the first reference signal is used for channel measurement, transmission resources of the plurality of reference signals included in the first reference signal may each correspond to a plurality of antenna ports (or, transmission resources of each of the plurality of reference signals include a plurality of antenna ports). In this design, the terminal can perform channel measurement based on the first reference signal to obtain channel information corresponding to multi-stream transmission, thereby enabling multi-stream transmission.

It is readily understood that, when the first reference signal can be used for both synchronization and channel measurement, a design of the first reference signal needs to satisfy both the foregoing condition that needs to be satisfied when the first reference signal is used for synchronization and the foregoing condition that needs to be satisfied when the first reference signal is used for channel measurement. In other words, descriptions of different functions of the first signal in this application may be combined with each other. Details are not repeatedly described below.

S502: The base station sends scheduling information to the terminal. Correspondingly, the terminal receives the scheduling information from the base station.

Specifically, after receiving the first reference signal, the base station may send scheduling information to the terminal. As described above, the first reference signal may be used to trigger scheduling information of uplink data transmission (or, the first reference signal is used to trigger the base station to send scheduling information of uplink data transmission, or the first reference signal is used to trigger the terminal to receive scheduling information of uplink data transmission). Alternatively, the first reference signal may be used to trigger scheduling information of downlink data transmission (or, the first reference signal is used to trigger the base station to send scheduling information of downlink data transmission, or the first reference signal is used to trigger the terminal to receive scheduling information of downlink data transmission). It may be understood that scheduling information of uplink data transmission may alternatively be described as follows: The scheduling information is used to schedule uplink data transmission. Scheduling information of downlink data transmission may alternatively be described as follows: The scheduling information is used to schedule downlink data transmission. For example, uplink data may be carried on a physical uplink shared channel (physical uplink shared channel, PUSCH), and downlink data may be carried on a physical downlink shared channel (physical downlink shared channel, PDSCH). Correspondingly, scheduling information used to schedule PUSCH transmission may be downlink control information (downlink control information, DCI) corresponding to the PUSCH, and scheduling information used to schedule PDSCH transmission may be DCI corresponding to the PDSCH. This is not limited.

It should be understood that, in either an uplink data transmission scenario or a downlink data transmission scenario, that the first reference signal triggers scheduling information of data transmission may be understood in either of the following two manners.

In a first manner, the base station may send the scheduling information within a first time period after receiving the first reference signal (or, the terminal may receive the scheduling information within a first time period after sending the first reference signal, or the terminal may receive the scheduling information within a time window after sending the first reference signal, where the time window is a time period, for example, the first time period). A length of the first time period may be predefined in a protocol, or may be configured in advance by the base station for the terminal. Optionally, a start time domain position/start time unit of the first time period may be an X1-th time unit after the terminal sends/the base station receives the first reference signal, where X1 is a positive integer. X1 may be predefined in a protocol, or may be configured in advance by the base station for the terminal. A unit of a time unit involved in this application may be a symbol, a slot, a mini-slot, a radio frame, a subframe, a second (s), a millisecond (ms), or the like.

In a second manner, the base station may receive the scheduling information in an A^{th} time unit after sending the first reference signal (or, the terminal may receive the scheduling information in an A^{th} time unit after sending the first reference signal, or a start time unit of the scheduling information is an A^{th} time unit after an end time unit of the first reference signal, or the start time unit of the scheduling information is separated from the end time unit of the first reference signal by A time units), where A is an integer greater than 0 (or, A is a positive integer). A may be predefined in a protocol, or may be configured in advance by the base station for the terminal. It should be understood that the start time unit of the scheduling information may be understood as a time unit in which a start time domain position of a transmission resource of the scheduling information is located, and the end time unit of the first reference signal may be understood as a time unit in which an end time domain position of a transmission resource of the first reference signal is located.

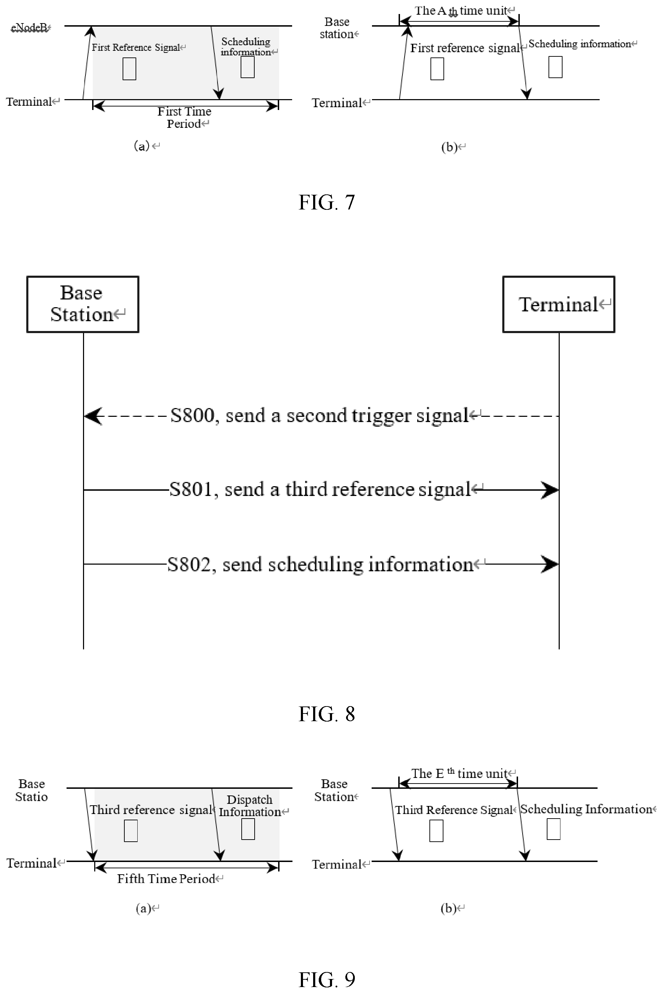

For example, (a) and (b) in FIG. 7 show two manners in which the first reference signal triggers scheduling information of data transmission.

It may be understood that, in either an uplink data transmission scenario or a downlink data transmission scenario, when the first reference signal is used for synchronization, the base station may further send synchronization information corresponding to the first reference signal to the terminal (or, the first reference signal sent by the terminal is further used to trigger the base station to send synchronization information). Correspondingly, the terminal receives the synchronization information corresponding to the first reference signal from the base station. It should be understood that the synchronization information usually needs to be provided to the terminal before data transmission information (for example, uplink/downlink data) is demodulated, so that the terminal completes time-frequency correction before data transmission, thereby improving transmission performance.

For example, the synchronization information corresponding to the first reference signal may be carried in scheduling information of uplink/downlink data transmission (or, the scheduling information includes/carries the synchronization information corresponding to the first reference signal), or may be carried in a reference signal corresponding to uplink/downlink data transmission. The reference signal corresponding to uplink/downlink data transmission herein may be understood as a demodulation reference signal corresponding to uplink/downlink transmission, or a reference signal used to demodulate uplink/downlink transmission, and is used to demodulate data. For example, the reference signal corresponding to uplink data transmission may be a demodulation reference signal (demodulation reference signal, DMRS), and the reference signal corresponding to downlink data transmission may also be a DMRS. This is not limited.

The synchronization information in this application is information that can be used for terminal synchronization. In a possible manner, the synchronization information may include at least one of a timing offset or a frequency offset. The terminal adjusts timing and frequency based on the synchronization information, thereby implementing synchronization.

The following describes features specific to downlink data transmission as compared with uplink data transmission.

In a possible embodiment, when the scheduling information of data transmission is scheduling information of downlink data transmission, before the terminal sends the first reference signal (that is, step S501), the method further includes step S500 shown in FIG. 5: The base station sends a first trigger signal to the terminal. Correspondingly, the terminal receives the first trigger signal from the base station. The first trigger signal is used to trigger the first reference signal (or, the first trigger signal is used to trigger the terminal to send the first reference signal). It may be understood that, by using the first trigger signal to trigger the terminal to send the first reference signal, the terminal can quickly complete synchronization, channel measurement, and other steps before downlink data transmission, thereby helping improve data transmission efficiency. That the first trigger signal is used to trigger the first reference signal may be understood in either of the following two manners.

In a first manner, the terminal may send the first reference signal within a second time period after receiving the first trigger signal (or, the base station may receive the first reference signal within a second time period after sending the first trigger signal). A length of the second time period may be predefined in a protocol, or may be configured in advance by the base station for the terminal. Optionally, a start time domain position/start time unit of the second time period may be an X2-th time unit after the terminal receives/the base station sends the first trigger signal, where X2 is a positive integer. X2 may be predefined in a protocol, or may be configured in advance by the base station for the terminal.

In a second manner, the terminal may send the first reference signal in a B-th time unit after receiving the first trigger signal (or, the base station may receive the first reference signal in a B-th time unit after sending the first trigger signal, or a start time unit of the first reference signal is a B-th time unit after an end time unit of the first trigger signal, or the start time unit of the first reference signal is separated from the end time unit of the first trigger signal by B time units), where B is an integer greater than 0. B may be predefined in a protocol, or may be configured in advance by the base station for the terminal. It should be understood that the start time unit of the first reference signal may be understood as a time unit in which a start time domain position of a transmission resource of the first reference signal is located, and the end time unit of the first trigger signal may be understood as a time unit in which an end time domain position of a transmission resource of the first trigger signal is located.

Optionally, the first trigger signal may further be used for synchronization. Correspondingly, the first reference signal may be used for channel measurement but not for synchronization. In other words, the first trigger signal may be used to trigger the first reference signal and for synchronization, and the first reference signal may be used to trigger scheduling information of data transmission and for channel measurement.

In a possible embodiment, when the scheduling information of data transmission is scheduling information of downlink data transmission, after the terminal sends the first reference signal (that is, step S501) and before the terminal receives the scheduling information (that is, step S502), the method may further include the following steps S5001 and S5002 (not shown in FIG. 5).

S5001: The base station sends a second reference signal to the terminal. Correspondingly, the terminal receives the second reference signal from the base station.

Specifically, the second reference signal may be used for interference measurement. For example, the second reference signal may be a precoded CSI-RS.

In a possible implementation, the terminal may receive the second reference signal within a third time period after sending the first reference signal (or, the base station may send the second reference signal within a third time period after receiving the first reference signal). A length of the third time period may be predefined in a protocol, or may be configured in advance by the base station for the terminal. Optionally, a start time domain position/start time unit of the third time period may be an X3-th time unit after the terminal sends/the base station receives the first reference signal, where X3 is a positive integer. X3 may be predefined in a protocol, or may be configured in advance by the base station for the terminal. Optionally, the third time period and the first time period may be a same time period, or may be different time periods. This is not limited.

In a possible implementation, the terminal may receive the second reference signal in a C-th time unit after sending the first reference signal (or, the base station may send the second reference signal in a C-th time unit after receiving the first reference signal, or a start time unit of the second reference signal is a C-th time unit after an end time unit of the first reference signal, or the start time unit of the second reference signal is separated from the end time unit of the first reference signal by C time units), where C is an integer greater than 0. C may be predefined in a protocol, or may be configured in advance by the base station for the terminal. It should be understood that the start time unit of the second reference signal may be understood as a time unit in which a start time domain position of a transmission resource of the second reference signal is located, and the end time unit of the first reference signal may be understood as a time unit in which an end time domain position of a transmission resource of the first reference signal is located. Optionally, C is less than A. In other words, after sending the first reference signal, the terminal needs to first receive the second reference signal to complete measurement (and report interference measurement information), and then receive the scheduling information of downlink data transmission.

S5002: The terminal sends interference measurement information to the base station. Correspondingly, the base station receives the interference measurement information from the terminal.

For example, the interference measurement information may be one or more of {CRI-RI-CQI}, {CRI-RI-i1}, or {CRI-RI-i1-CQI}.

In a possible implementation, the terminal may receive the scheduling information within a fourth time period after sending the interference measurement information (or, the base station may send the scheduling information within a fourth time period after receiving the interference measurement information). A length of the fourth time period may be predefined in a protocol, or may be configured in advance by the base station for the terminal. Optionally, a start time domain position/start time unit of the fourth time period may be an X4-th time unit after the terminal sends/the base station receives the interference measurement information, where X4 is a positive integer. X4 may be predefined in a protocol, or may be configured in advance by the base station for the terminal.

In a possible implementation, the terminal may receive the scheduling information in a D-th time unit after sending the interference measurement information (or, the base station may send the scheduling information in a D-th time unit after receiving the interference measurement information, or a start time unit of the scheduling information is a D-th time unit after an end time unit of the interference measurement information, or the start time unit of the scheduling information is separated from the end time unit of the interference measurement information by D time units, or the terminal may send the interference measurement information D time units before receiving the scheduling information), where D is an integer greater than 0. D may be predefined in a protocol, or may be configured in advance by the base station for the terminal. It should be understood that the start time unit of the scheduling information may be understood as a time unit in which a start time domain position of a transmission resource of the scheduling information is located, and the end time unit of the interference measurement information may be understood as a time unit in which an end time domain position of a transmission resource of the interference measurement information is located.

In a possible implementation, the terminal may receive the scheduling information within a seventh time period after receiving the second reference signal (or, the base station may send the scheduling information within a seventh time period after sending the second reference signal). A length of the seventh time period may be predefined in a protocol, or may be configured in advance by the base station for the terminal. Optionally, a start time domain position/start time unit of the seventh time period may be an X7-th time unit after the terminal receives/the base station sends the second reference signal, where X7 is a positive integer. X7 may be predefined in a protocol, or may be configured in advance by the base station for the terminal.

In a possible implementation, the terminal may receive the scheduling information in a G-th time unit after receiving the second reference signal (or, the base station may send the scheduling information in a G-th time unit after sending the second reference signal, or a start time unit of the scheduling information is a G-th time unit after an end time unit of the second reference signal, or the start time unit of the scheduling information is separated from the end time unit of the second reference signal by G time units), where G is an integer greater than 0. G may be predefined in a protocol, or may be configured in advance by the base station for the terminal. It should be understood that the start time unit of the scheduling information may be understood as a time unit in which a start time domain position of a transmission resource of the scheduling information is located, and the end time unit of the second reference signal may be understood as a time unit in which an end time domain position of a transmission resource of the second reference signal is located.

In embodiments of this application, an uplink reference signal (namely, the first reference signal) is designed, so that when there is a data transmission requirement in an energy-saving mode, the terminal sends the first reference signal for fast synchronization and/or channel measurement, and the first reference signal is further used to trigger data transmission scheduling. In this way, fast data transmission in the energy-saving mode can be implemented through fewer transmission steps, thereby helping improve communication performance.

Refer to FIG. 8. FIG. 8 is another schematic flowchart of a communication method according to an embodiment of this application. An execution body of the method shown in FIG. 8 may be a base station or a terminal. Alternatively, the execution body of the method shown in FIG. 8 may be a chip in a base station or a terminal. For ease of description, the following mainly uses the base station or the terminal as the execution body for description. It should be understood that FIG. 8 is a schematic flowchart of a method embodiment of this application, and shows detailed communication steps or operations of the method. However, these steps or operations are merely examples. In embodiments of this application, another operation or a variation of an operation in FIG. 8 may further be performed. In addition, the steps in FIG. 8 may be performed in an order different from that presented in FIG. 8, and not all operations in FIG. 8 may need to be performed. As shown in FIG. 8, the communication method may include the following steps.

S801: The base station sends a third reference signal to the terminal. Correspondingly, the terminal receives the third reference signal from the base station.

For understanding of step S801, refer to the description of S501 in the embodiment corresponding to FIG. 5. A difference lies in that the first reference signal is a reference signal sent by the terminal to the base station (or, the first reference signal is an uplink reference signal), whereas the third reference signal is a reference signal sent by the base station to the terminal (or, the third reference signal is a downlink reference signal). In addition, when the third reference signal is used for synchronization, the third reference signal may specifically be an SSB, a TRS, or the like. This is not limited in this application. Specifically, the terminal can obtain a timing offset and/or a frequency domain offset by measuring the third reference signal, and then adjust timing and frequency based on the measured timing offset and/or frequency domain offset, thereby implementing synchronization.

S802: The base station sends scheduling information to the terminal. Correspondingly, the terminal receives the scheduling information from the base station.

Specifically, after sending the third reference signal, the base station may further send scheduling information to the terminal. As described above, the third reference signal may be used to trigger scheduling information of uplink data transmission (or, the third reference signal is used to trigger the base station to send scheduling information of uplink data transmission, or the third reference signal is used to trigger the terminal to receive scheduling information of uplink data transmission). Alternatively, the third reference signal may be used to trigger scheduling information of downlink data transmission (or, the third reference signal is used to trigger the base station to send scheduling information of downlink data transmission, or the third reference signal is used to trigger the terminal to receive scheduling information of downlink data transmission). It should be understood that, in either an uplink data transmission scenario or a downlink data transmission scenario, that the third reference signal triggers scheduling information of data transmission may be understood in either of the following two manners.

In a first manner, the base station may send the scheduling information within a fifth time period after sending the third reference signal (or, the terminal may receive the scheduling information within a fifth time period after receiving the third reference signal, or the terminal may receive the scheduling information within a time window after receiving the third reference signal, where the time window is a time period, for example, the fifth time period). A length of the fifth time period may be predefined in a protocol, or may be configured in advance by the base station for the terminal. Optionally, a start time domain position/start time unit of the fifth time period may be an X5-th time unit after the terminal receives/the base station sends the third reference signal, where X5 is a positive integer. X5 may be predefined in a protocol, or may be configured in advance by the base station for the terminal. A unit of a time unit involved in this application may be a symbol, a slot, a mini-slot, a radio frame, a subframe, a second (s), a millisecond (ms), or the like. This is not limited in this application.

In a second manner, the base station may receive the scheduling information in an E-th time unit after receiving the third reference signal (or, the terminal may receive the scheduling information in an E-th time unit after receiving the third reference signal, or a start time unit of the scheduling information is an E-th time unit after an end time unit of the third reference signal, or the start time unit of the scheduling information is separated from the end time unit of the third reference signal by E time units), where E is an integer greater than 0 (or, E is a positive integer). E may be predefined in a protocol, or may be configured in advance by the base station for the terminal. It should be understood that the start time unit of the scheduling information may be understood as a time unit in which a start time domain position of a transmission resource of the scheduling information is located, and the end time unit of the third reference signal may be understood as a time unit in which an end time domain position of a transmission resource of the third reference signal is located.

For example, (a) and (b) in FIG. 9 show two cases in which the third reference signal triggers scheduling information of data transmission.

It may be understood that, in either an uplink data transmission scenario or a downlink data transmission scenario, when the third reference signal is used for channel measurement, the terminal may perform channel measurement based on the third reference signal, and send channel information corresponding to the third reference signal to the base station. Correspondingly, the base station receives, from the terminal, the channel information corresponding to the third reference signal.

In a possible implementation, the terminal may receive the scheduling information within a sixth time period after sending the channel information (or, the base station may send the scheduling information within a sixth time period after receiving the channel information). A length of the sixth time period may be predefined in a protocol, or may be configured in advance by the base station for the terminal. Optionally, a start time domain position/start time unit of the sixth time period may be an X6-th time unit after the terminal receives/the base station sends the third reference signal, where X6 is a positive integer. X6 may be predefined in a protocol, or may be configured in advance by the base station for the terminal.

In a possible implementation, a start time unit of the scheduling information is an F-th time unit after an end time unit of the channel information (or, the base station may send the scheduling information in an F-th time unit after receiving the channel information, or the start time unit of the scheduling information is an F-th time unit after the end time unit of the channel information, or the start time unit of the scheduling information is separated from the end time unit of the channel information by F time units, or the terminal may send the channel information F time units before receiving the scheduling information), where F is an integer greater than 0. F may be predefined in a protocol, or may be configured in advance by the base station for the terminal. It should be understood that the start time unit of the scheduling information may be understood as a time unit in which a start time domain position of a transmission resource of the scheduling information is located, and the end time unit of the channel information may be understood as a time unit in which an end time domain position of a transmission resource of the channel information is located.

In a possible implementation, when the scheduling information of data transmission is scheduling information of downlink data transmission, the third reference signal and the scheduling information may belong to a same transmission structure, or may belong to different transmission structures. This is not limited. Optionally, in another possible implementation, when the scheduling information of data transmission is scheduling information of uplink data transmission, the third reference signal and the scheduling information may belong to a same transmission structure, or may belong to different transmission structures.

The following describes features specific to uplink data transmission as compared with downlink data transmission.

In a possible embodiment, when the scheduling information of data transmission is scheduling information of uplink data transmission, before the terminal receives the third reference signal (that is, step S801), the method further includes step S800 shown in FIG. 8: The terminal sends a second trigger signal to the base station. Correspondingly, the base station receives the second trigger signal from the terminal. The second trigger signal is used to trigger the third reference signal (or, the second trigger signal is used to trigger the base station to send the third reference signal, or the second trigger signal is used to trigger the terminal to receive the third reference signal). It may be understood that, by using the second trigger signal to trigger the base station to send the third reference signal, the terminal can quickly complete synchronization, channel measurement, and other steps before uplink data transmission, thereby helping improve data transmission efficiency. That the second trigger signal is used to trigger the third reference signal may be understood in either of the following two manners.

In a first manner, the terminal may receive the third reference signal within an eighth time period after sending the second trigger signal (or, the base station may send the third reference signal within an eighth time period after receiving the second trigger signal). A length of the eighth time period may be predefined in a protocol, or may be configured in advance by the base station for the terminal. Optionally, a start time domain position/start time unit of the eighth time period may be an X8-th time unit after the terminal sends/the base station receives the second trigger signal, where X8 is a positive integer. X8 may be predefined in a protocol, or may be configured in advance by the base station for the terminal.

In a second manner, the terminal may receive the third reference signal in an H-th time unit after sending the second trigger signal (or, the base station may send the third reference signal in an H-th time unit after receiving the second trigger signal, or a start time unit of the third reference signal is an H-th time unit after an end time unit of the second trigger signal, or the start time unit of the third reference signal is separated from the end time unit of the second trigger signal by H time units), where H is an integer greater than 0. H may be predefined in a protocol, or may be configured in advance by the base station for the terminal. It should be understood that the start time unit of the third reference signal may be understood as a time unit in which a start time domain position of a transmission resource of the third reference signal is located, and the end time unit of the second trigger signal may be understood as a time unit in which an end time domain position of a transmission resource of the second trigger signal is located.

Optionally, the second trigger signal may further be used for synchronization (or, the second trigger signal sent by the terminal is further used to trigger the base station to send synchronization information). Correspondingly, the third reference signal may be used for channel measurement but not for synchronization. In other words, the second trigger signal may be used to trigger the third reference signal and for synchronization, and the third reference signal may be used to trigger scheduling information of data transmission and for channel measurement.

It should be noted that, when the second trigger signal is used for synchronization, the base station may further send synchronization information corresponding to the second trigger signal to the terminal (or, the second trigger signal sent by the terminal is further used to trigger the base station to send synchronization information). Correspondingly, the terminal receives the synchronization information corresponding to the second trigger signal from the base station. It should be understood that the synchronization information usually needs to be provided to the terminal before uplink data transmission information (namely, uplink data) is demodulated, so that the terminal completes time-frequency correction before data transmission, thereby improving transmission performance.

For example, the synchronization information corresponding to the second trigger signal may be carried in the third reference signal (or, the third reference signal includes/carries the synchronization information corresponding to the second trigger signal), may be carried in scheduling information of uplink data transmission (or, the scheduling information of uplink data transmission includes/carries the synchronization information corresponding to the second trigger signal), or may be carried in a reference signal corresponding to uplink data transmission. For example, the reference signal corresponding to uplink data transmission may be a DMRS.

The synchronization information in this application is information that can be used for terminal synchronization. In a possible manner, the synchronization information may include at least one of a timing offset or a frequency offset. The terminal adjusts timing and frequency based on the synchronization information, thereby implementing synchronization.

In embodiments of this application, a downlink reference signal (namely, the third reference signal) is designed, so that when there is a data transmission requirement in an energy-saving mode, the base station sends the third reference signal for fast synchronization and/or channel measurement, and the third reference signal is further used to trigger data transmission scheduling. In this way, fast data transmission in the energy-saving mode can be implemented through fewer transmission steps, thereby helping improve communication performance.

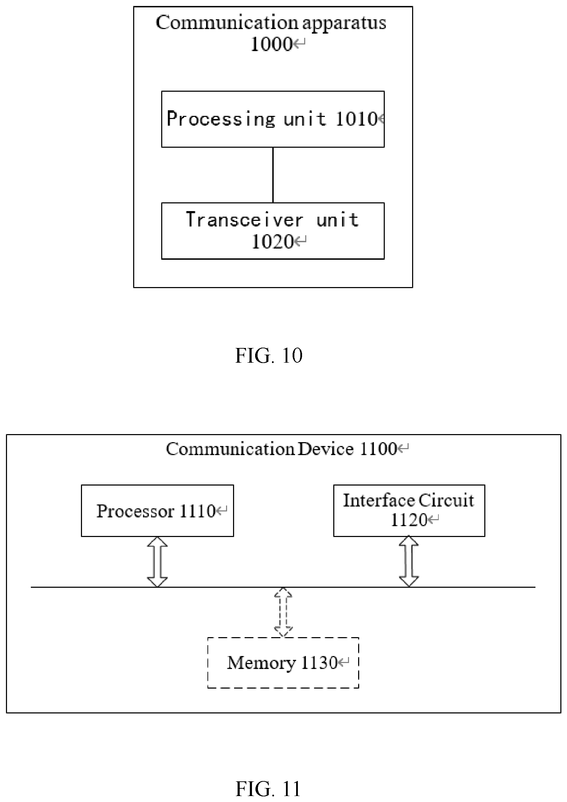

The following describes in detail the communication apparatus provided in this application with reference to FIG. 10 and FIG. 11.

It may be understood that, to implement the functions in the foregoing embodiments, a communication apparatus includes a corresponding hardware structure and/or software module for performing each function. A person skilled in the art should readily recognize that, in combination with the units and method steps in the examples described in the embodiments disclosed in this application, this application may be implemented by hardware or a combination of hardware and computer software. Whether a function is performed by hardware or by computer software driving hardware depends on a particular application scenario and design constraint of the technical solution.

FIG. 10 and FIG. 11 are schematic structural diagrams of possible communication apparatuses according to embodiments of this application. These communication apparatuses may be configured to implement functions of the terminal or the radio access network device (for example, the base station) in the foregoing method embodiments, and therefore can also implement beneficial effects of the foregoing method embodiments. In embodiments of this application, the communication apparatus may be one of the terminals 120a to 120j shown in FIG. 1, may be the RAN node 110a or 110b shown in FIG. 1, or may be a module (for example, a chip) used in a terminal or a radio access network device.

As shown in FIG. 10, a communication apparatus 1000 includes a processing unit 1010 and a transceiver unit 1020. The communication apparatus 1000 is configured to implement a function of the terminal or the radio access network device in the method embodiment shown in FIG. 5 or FIG. 8.

In an implementation, when the communication apparatus 1000 is configured to implement a function of the terminal in the method embodiment shown in FIG. 5:

the transceiver unit 1020 is configured to send a first reference signal, where the first reference signal is used to trigger scheduling information of data transmission, and the first reference signal is used for channel measurement and/or synchronization; and the transceiver unit 1020 is configured to receive the scheduling information.

The processing unit 1010 is configured to process a received signal/information.

When the communication apparatus 1000 is configured to implement a function of the radio access network device in the method embodiment shown in FIG. 5:

the transceiver unit 1020 is configured to receive a first reference signal, where the first reference signal is used to trigger scheduling information of data transmission, and the first reference signal is used for channel measurement and/or synchronization; and the transceiver unit 1020 is configured to send the scheduling information.

The processing unit 1010 is configured to process a received signal/information.

In another implementation, when the communication apparatus 1000 is configured to implement a function of the terminal in the method embodiment shown in FIG. 8:

the transceiver unit 1020 is configured to receive a third reference signal, where the third reference signal is used to trigger scheduling information of data transmission, and the third reference signal is used for channel measurement and/or synchronization; and the transceiver unit 1020 is configured to receive the scheduling information.

The processing unit 1010 is configured to process a received signal/information.

When the communication apparatus 1000 is configured to implement a function of the radio access network device in the method embodiment shown in FIG. 6:

the transceiver unit 1020 is configured to send a third reference signal, where the third reference signal is used to trigger scheduling information of data transmission, and the third reference signal is used for channel measurement and/or synchronization; and the transceiver unit 1020 is configured to send the scheduling information.

The processing unit 1010 is configured to process a received signal/information.

For a more detailed description of the processing unit 1010 and the transceiver unit 1020, refer to related descriptions in the method embodiment shown in FIG. 5 or FIG. 8.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, input data required by the processor 1110 to run the instructions, or data generated after the processor 1110 runs the instructions.

When the communication apparatus 1100 is configured to implement the method shown in FIG. 5 or FIG. 8, the processor 1110 is configured to implement a function of the processing unit 1010, and the interface circuit 1120 is configured to implement a function of the transceiver unit 1020.

When the communication apparatus is a chip used in a terminal, the terminal chip implements a function of the terminal in the foregoing method embodiments. The terminal chip receives, through another module (for example, a radio frequency module or an antenna) in the terminal, information sent by the radio access network device to the terminal; or the terminal chip sends information to another module (for example, a radio frequency module or an antenna) in the terminal, where the information is information sent by the terminal to the radio access network device.

When the communication apparatus is a module used in a radio access network device, the radio access network device module implements a function of the radio access network device in the foregoing method embodiments. The radio access network device module receives, from another module (for example, a radio frequency module or an antenna) in the radio access network device, information sent by the terminal to the radio access network device; or the radio access network device module sends information to another module (for example, a radio frequency module or an antenna) in the radio access network device, where the information is information sent by the radio access network device to the terminal. The radio access network device module herein may be a baseband chip of the radio access network device, may be a CU, a DU, or another module, or may be an apparatus in an open radio access network (open radio access network, O-RAN) architecture, for example, an open CU or an open DU.

It may be understood that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), another programmable logic device, a transistor logic device, a hardware component, or any combination thereof. The general-purpose processor may be a microprocessor, or may be any conventional processor.

The method steps in embodiments of this application may be implemented in hardware, or may be implemented by software instructions executable by a processor. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. An exemplary storage medium is coupled to the processor, so that the processor can read information from the storage medium and write information into the storage medium. Alternatively, the storage medium may be a component of the processor. The processor and the storage medium may be located in an ASIC. In addition, the ASIC may be located in a radio access network device or a terminal. Alternatively, the processor and the storage medium may exist as discrete components in a radio access network device or a terminal.

In the foregoing embodiments, all or some functions may be implemented by software, hardware, firmware, or any combination thereof. When software is used for implementation, all or some functions may be implemented in a form of a computer program product. The computer program product includes one or more computer programs or instructions. When the computer program or the instructions are loaded and executed on a computer, all or some of the procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from one computer-readable storage medium to another computer-readable storage medium. For example, the computer program or the instructions may be transmitted from one website, computer, server, or data center to another website, computer, server, or data center in a wired or wireless manner. The computer-readable storage medium may be any available medium accessible by the computer, or a data storage device, such as a server or a data center, integrating one or more available media. The available medium may be a magnetic medium, for example, a floppy disk, a hard disk, or a magnetic tape; may be an optical medium, for example, a digital versatile disc; or may be a semiconductor medium, for example, a solid-state drive. The computer-readable storage medium may be a volatile storage medium or a non-volatile storage medium, or may include both a volatile storage medium and a non-volatile storage medium.

In the embodiments of this application, unless otherwise specified or unless there is a logical conflict, terms and/or descriptions in different embodiments are consistent and may be mutually referenced, and technical features in different embodiments may be combined based on their internal logical relationships to form a new embodiment.

It may be understood that various numerical numbers involved in embodiments of this application are merely used for differentiation for ease of description, and are not intended to limit the scope of embodiments of this application. Magnitudes of sequence numbers of the foregoing processes do not indicate an execution order. An execution order of the processes should be determined based on functions and internal logic of the processes.

## Claims

1. A communication method, comprising:
sending a first reference signal, wherein the first reference signal is used to trigger scheduling information of data transmission, and the first reference signal is used for channel measurement and/or synchronization; and
receiving the scheduling information.

2. The method according to claim 1, wherein the receiving the scheduling information comprises:
receiving the scheduling information within a first time period after sending the first reference signal; or
receiving the scheduling information in an A^{th} time unit after sending the first reference signal, wherein A is an integer greater than 0.

3. The method according to claim 1 or 2, wherein the data transmission is downlink data transmission;
before the sending a first reference signal, the method further comprises:
receiving a first trigger signal, wherein the first trigger signal is used to trigger the first reference signal.

4. The method according to claim 3, wherein the sending a first reference signal comprises:
sending the first reference signal within a second time period after receiving the first trigger signal; or
sending the first reference signal in a B-th time unit after receiving the first trigger signal, wherein B is an integer greater than 0.

5. The method according to claim 3 or 4, wherein the first trigger signal is used for synchronization, and the first reference signal is used for channel measurement.

6. The method according to any one of claims 3 to 5, wherein after the sending a first reference signal, the method further comprises:
receiving a second reference signal, wherein the second reference signal is used for interference measurement; and
sending interference measurement information based on the second reference signal.

7. The method according to claim 6, wherein the receiving a second reference signal comprises:
receiving the second reference signal within a third time period after sending the first reference signal; or
receiving the second reference signal in a C-th time unit after sending the first reference signal, wherein C is an integer greater than 0.

8. The method according to claim 6 or 7, wherein the receiving the scheduling information comprises:
receiving the scheduling information within a fourth time period after sending the interference measurement information; or
a start time unit of the scheduling information is a D-th time unit after an end time unit of the interference measurement information, wherein D is an integer greater than 0.

9. The method according to any one of claims 1 to 8, wherein the scheduling information further comprises synchronization information corresponding to the first reference signal.

10. The method according to any one of claims 1 to 9, wherein the first reference signal is used for synchronization, and the first reference signal comprises a plurality of reference signals; frequency domain positions of transmission resources of the plurality of reference signals are the same, and time domain positions of the transmission resources of the plurality of reference signals are spaced apart.

11. A communication method, comprising:
receiving a first reference signal, wherein the first reference signal is used to trigger scheduling information of data transmission, and the first reference signal is used for channel measurement and/or synchronization; and
sending the scheduling information.

12. The method according to claim 11, wherein the sending the scheduling information comprises:
sending the scheduling information within a first time period after receiving the first reference signal; or
sending the scheduling information in an A^{th} time unit after receiving the first reference signal, wherein A is an integer greater than 0.

13. The method according to claim 11 or 12, wherein the data transmission is downlink data transmission;
before the receiving a first reference signal, the method further comprises:
sending a first trigger signal, wherein the first trigger signal is used to trigger the first reference signal.

14. The method according to claim 13, wherein the receiving a first reference signal comprises:
receiving the first reference signal within a second time period after sending the first trigger signal; or
receiving the first reference signal in a B-th time unit after sending the first trigger signal, wherein B is an integer greater than 0.

15. The method according to claim 13 or 14, wherein the first trigger signal is used for synchronization, and the first reference signal is used for channel measurement.

16. The method according to any one of claims 13 to 15, wherein after the receiving a first reference signal, the method further comprises:
sending a second reference signal, wherein the second reference signal is used for interference measurement; and
receiving interference measurement information.

17. The method according to claim 16, wherein the sending a second reference signal comprises:
sending the second reference signal within a third time period after receiving the first reference signal; or
sending the second reference signal in a C-th time unit after receiving the first reference signal, wherein C is an integer greater than 0.

18. The method according to claim 16 or 17, wherein the sending the scheduling information comprises:
sending the scheduling information within a fourth time period after receiving the interference measurement information; or
a start time unit of the scheduling information is a D-th time unit after an end time unit of the interference measurement information, wherein D is an integer greater than 0.

19. The method according to any one of claims 11 to 18, wherein the scheduling information further comprises synchronization information corresponding to the first reference signal.

20. The method according to any one of claims 11 to 19, wherein the first reference signal is used for synchronization, and the first reference signal comprises a plurality of reference signals; periods and frequency domain positions of transmission resources respectively corresponding to the plurality of reference signals are the same, and time domain positions of the transmission resources of the plurality of reference signals are spaced apart.

21. A communication apparatus, comprising a unit or module configured to perform the method according to any one of claims 1 to 10, or comprising a unit or module configured to perform the method according to any one of claims 11 to 20.

22. A communication apparatus, comprising a processor and an interface circuit, wherein the interface circuit is configured to receive a signal from another communication apparatus outside the communication apparatus and transmit the signal to the processor, or send a signal from the processor to another communication apparatus outside the communication apparatus; and the processor is configured to implement, by using a logic circuit or by executing code instructions, the method according to any one of claims 1 to 10, or the method according to any one of claims 11 to 20.

23. A computer-readable storage medium, wherein the storage medium stores a computer program or instructions, and when the computer program or the instructions are executed by a communication apparatus, the method according to any one of claims 1 to 10 or the method according to any one of claims 11 to 20 is implemented.

24. A computer program product, comprising computer program code, wherein when the computer program code runs on a computer, the method according to any one of claims 1 to 10 or the method according to any one of claims 11 to 20 is implemented.
